# EUROPEAN PATENT SPECIFICATION

(11) **EP 3 266 297 B1**
(45) Date of publication and mention of the grant of the patent: **17.06.2020**
(21) Application number: 17178225.3
(22) Date of filing: 27.06.2017
(51) Int. Cl.: A01D 41/12

(54) **CROP RESIDUE SPREADER**
ERNTEGUTRESTESTREUER
DISSIPATEUR DE RÉSIDUS DE CULTURES

(30) Priority: 08.07.2016 BE 201605571
(43) Date of publication of application: 10.01.2018
(73) Proprietor: CNH Industrial Belgium NV, 8210 Zedelgem (BE)
(72) Inventor: BALLEGEER, Stefaan, 8730 Beernem (BE); DESMET, Stefaan, 9850 Vosselare (BE); DUQUESNE, Frank R. G., 8550 Zwevegem (BE); MAES, Eli, 8470 Snaaskerke (BE); SOMERS, Tom N. N., 9880 Aalter (BE); HOLLEVOET, Peter, 8820 Zedelgem (BE)
(74) Representative: CNH Industrial IP Department

(56) References cited:
- WO-A1-2011/083128
- DE-A1- 19 750 393
- DE-C1- 19 908 111
- DE-U1- 29 822 621
- US-A1- 2015 373 913

## Description

### BACKGROUND OF THE INVENTION

The present invention relates to agricultural harvesters such as combines, and, more particularly, to crop residue systems used in such combines.

An agricultural harvester known as a "combine" is historically termed such because it combines multiple harvesting functions with a single harvesting unit, such as picking, threshing, separating and cleaning. A combine includes a header which removes the crop from a field, and a feeder housing which transports the crop matter into a threshing rotor. The threshing rotor rotates within a perforated housing, which may be in the form of adjustable concaves and performs a threshing operation on the crop to remove the grain. Once the grain is threshed, it falls through perforations in the concaves onto a grain pan. From the grain pan, the grain is cleaned using a cleaning system, and is then transported to a grain tank onboard the combine. A cleaning fan blows air through the sieves to discharge straw, chaff and other debris toward the rear of the combine.

During the process of harvesting, crop material other than grain (MOG) is intended to be expelled from the combine. This material is usually derived from one of two areas, the threshing rotor or the cleaning system. The material expelled from the threshing rotor is generally referred to as straw and the material expelled from the cleaning system is generally referred to as chaff. This crop residue can be dealt with in several ways, generally categorized as spread and windrowed.

Spread refers to using a mechanical device to distribute the straw and/or chaff evenly across the width of the combine header cut width. This spread material is usually chopped to as short a length as possible so that when it is spread it will break down as quickly as possible and not interfere with tillage or seeding operations.

The residue spreader is usually formed from a rotor driven generally about a vertical axis and having a plurality of vanes or bats that propel residue entering from an axially directed inlet outward in a tangential stream so as to distribute residue continuously across a relatively wide swath. An example of such an arrangement is illustrated in US Patent 4,917,652. The residue comes through a vertical inlet and, as the bats rotate about the axis, the residue is propelled towards the tangential outlet.

Another residue spreader arrangement is shown in published German patent application DE 197 50 393 A1. Also herein the spreader comprises a rotor with a set of substantially radial bats, which are rotated in a housing having a residue inlet adjacent the rotation axis and a radially outward outlet. The housing is substantially co-axial with the rotation axis of the bats.

One of the issues occurring with prior art spreaders is that material towards the end of its path may recirculate back into the inlet and diminish the efficiency of the rotating bats. The recirculation of the residue to the inlet impedes the action of sucking material into the inlet of the crop residue spreader.

Accordingly, what is needed in the art is an efficient crop residue spreader that minimizes, if not eliminates recirculation of residue, for managing the distribution of crop residue in a combine.

### SUMMARY OF THE INVENTION

The present invention provides apparatus for crop residue management having efficiently directed crop residue.

The invention, in one form, relates to a crop residue spreader having a plurality of radially extending bats mounted for rotational movement about an axis. A housing surrounds the bats and has an inlet for residue adjacent said axis and a radially outward outlet starting from an opening in the housing. According to the invention, the housing has a width measured in a direction parallel to said axis that increases from a minimum width adjacent the downstream end of said opening around the periphery of said housing up to the outlet.

In another form, the invention relates to an agricultural combine including a crop processing system for separating crop material from crop residue containing straw and chaff and for discharging crop residue therefrom in a stream. A crop residue spreader receives the stream from the crop processing apparatus. The crop residue is of the type indicated above. It has a plurality of radially extending bats mounted for rotational movement about an axis. A housing surrounds the bats and has an inlet for residue adjacent an axis and a radially outward outlet. The housing has an axial height that increases around its periphery up to the outlet.

One advantage of the present invention is that recirculation of crop residue around the inlet of a residue spreader is minimized if not eliminated.

Another advantage of the present invention is that crop residue is more efficiently spread.

Still another advantage is that the instance of clogging in the inlet is minimized, if not eliminated.

### BRIEF DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
Fig. 1 is a side view of an embodiment of an agricultural harvester in the form of a combine which may include a crop residue spreader of the present invention;
Fig. 2 is a plan view of a crop residue spreader incorporated in the agricultural harvester of Fig. 1 showing a position in which crop residue is distributed laterally; and,
Fig. 3 is a perspective view of the crop residue spreader of Fig. 2.

Corresponding reference characters indicate corresponding parts throughout the several views. The exemplifications set out herein illustrate embodiments of the invention, and such exemplifications are not to be construed as limiting the scope of the invention in any manner.

### DETAILED DESCRIPTION OF THE INVENTION

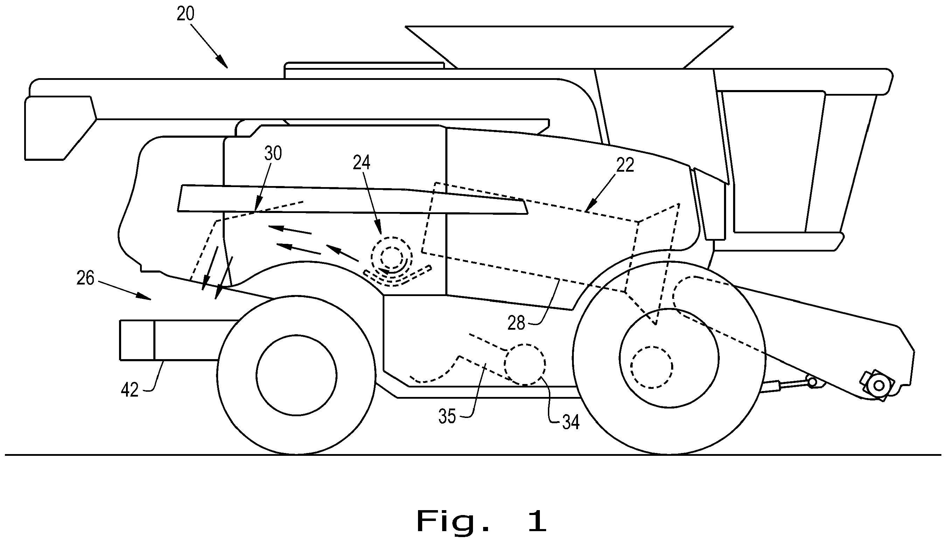

Fig. 1 shows an agricultural combine 20 which includes the usual harvesting apparatus (not all of which is shown to facilitate an understanding of the invention). An axially oriented crop processing system 22 receives harvested crop and a crop residue treatment and distribution system 24 with a crop residue spreader 26 is positioned at the aft end of combine 20. The crop residue treatment and distribution system 24 includes a cylindrical threshing rotor 28 that conveys a flow of crop material in a helical flow path. As the crop material is moved through the processing apparatus 22, the desired crop such as grain or other material is loosened and separated from crop residue such as husk and pods in a cleaning system located beneath the threshing rotor 28. The crop processing system 22 includes a blower 34, schematically depicted, to aid in the separation of the desired crop from the crop residue. The blower 34 has a duct 35 extending aft in the combine 20 towards the cleaning system and the crop residue treatment and distribution system 24.

The crop residue spreader system includes a duct 30 that directs the crop residue stream towards a pair of crop residue spreaders 42.

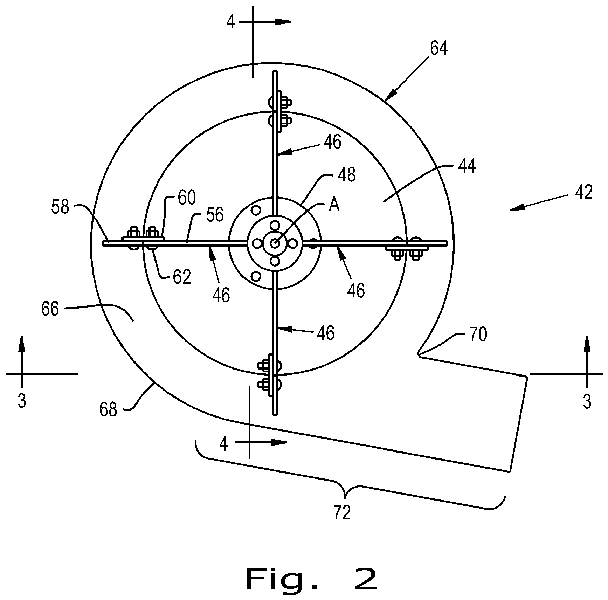

Referring to Figs. 2-3, crop residue spreaders 42 include side-by-side disks 44 journaled for rotation about axis A and positioned laterally with respect to one another when in the spreading configuration. Disks 44 have a plurality of bats 46 that act like vanes to positively direct crop residue in a lateral direction. A cone 48 extends vertically upward from each disk 44 and directs residue from a direction along axis A radially outward so it is directed by the bats 46. A motor 50 is connected to each disk 44 through a motor output shaft (not shown) causing the disks 44 to rotate as needed. Although motor 50 is illustrated as hydraulic, it may be in any one of a number of forms including mechanical interconnection to a remotely positioned motor. Rotation of disks 44 is set up so that when viewed from above and looking towards the front of the combine 20, the right side disk (illustrated) rotates counterclockwise and the left disk rotates clockwise so that they propel crop residue between them aft and around and laterally.

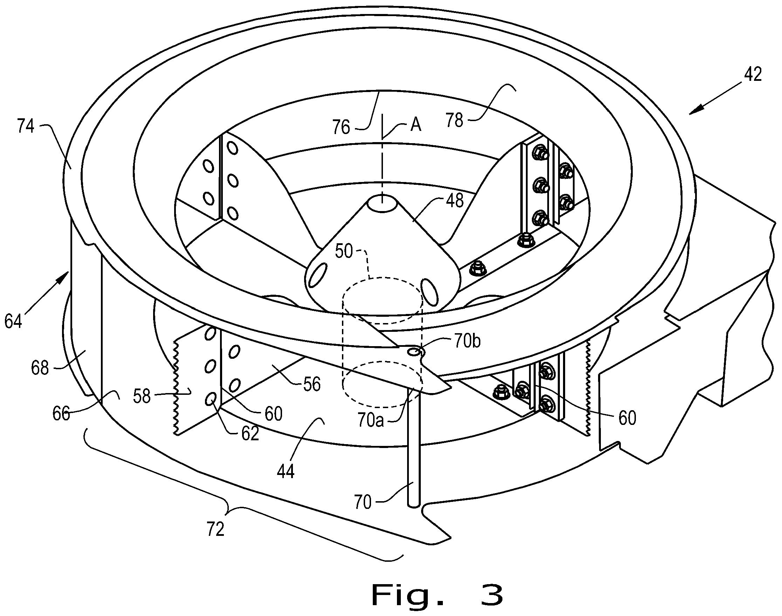

Figs. 2 and 3 show the crop residue spreader on the right of, and in the rear portion of, a combine. Each bat 46 includes an inner portion 56 secured to disk 44 and an outer portion 58 connected to the inner portion through a flexible connector 60 and suitable fasteners 62. The flexible connector 60 enables better accommodation of varying quantities of residue passing through the crop residue spreader device 42.

The crop residue spreader 42 has a housing 64 including a floor 66 underneath the disk 44 and forming the structural base for the housing 64. An outer wall 68 extends around the periphery of the bats 46 to form a straight sided curved outer wall. As discussed below, the width of the housing 64 may increase from a minimum height at reference point 70 and continuously increases to a maximum height around the periphery of the housing 64. An outlet section 72 is connected to outer wall 68 and provides a closed tangentially directed outlet for residue. An upper housing wall 74 connects with the outer wall 68 and has a distance from the floor 66 in a direction parallel to axis A (housing width) that increases continuously from a minimum point at reference point 70 adjacent the outlet section 72 around the periphery of housing 68 to the outlet section 72. As can be seen in Fig. 2 and Fig. 3, the reference point 70 is located at the downstream end of the opening in the housing 68, which opening forms the start of the outlet section 72. Downstream and upstream are therein used as relative terms referring to the direction of rotation of the bats 46 and the residue propelled thereby. Fig. 2 and Fig. 3 show the right side spreader unit 42 wherein the bats are rotated counterclockwise (seen from above). For a rotating bat 46 passing the opening in the housing 68, the reference point 70 is adjacent the end of the opening. The upper housing wall 74 has a circular inlet 76 with a tapered section 78 angled in the direction of flow into the interior of housing 64.

With particular reference to Fig. 3, the minimum dimension of outer wall 68 is at reference point 70A directly behind the opening (seen from the tip of a rotating bat 46) and, during a full rotation of the bat 46, continuously increases to its maximum at reference point 70B. Thus, it is seen that the housing 68, which surrounds the bats 46, has an increasing width. With reference to Fig. 2, a radial distance of the outer wall 68 from the axis A increases continuously around the periphery of housing 64 to a maximum adjacent the outlet section 72. As a result, the flow path for residue expands as the residue is directed around the periphery by the bats 46. It is to be noted that the advantages of the invention are also obtained when the radial distance of the outer wall 68 from the axis A does not increase around the periphery of the housing. The increasing radial distance only adds to the functional advantages obtained by continuously increasing the width of the housing 64 around its periphery.

By continuously increasing the width of the housing 64 around its periphery, it has been found that recirculation of residue into inlet 76 is minimized if not eliminated. A range of continuous increases around the periphery may be employed and a greater increase in the width than the radial distance may be employed. It should be noted that the expansion of the radial distance is such that the bats may still function as a residue particulate mover.

While this invention has been described with respect to at least one embodiment, the present invention can be further modified within the scope of the claims. This application is therefore intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. A crop reside spreader (42) comprising:
a plurality of radially extending bats (46) mounted for rotational movement about an axis (A) for moving residue; and
a housing (64) surrounding said bats (46) and having an inlet (76) for residue adjacent said axis (A) and having an outer wall (68) extending around the periphery of said bats (46), said housing (64) further comprising an outlet (72) connected to said outer wall (68);
**characterized in that** said housing (64) has a width measured in a direction parallel to said axis (A) that increases from a minimum width adjacent the downstream end of said outlet (72) around the periphery of said housing (64) up to said outlet (72).

2. The crop residue spreader (42) as claimed in claim 1 wherein the outer wall (68) continuously increases in radial distance from said axis (A).

3. The crop residue spreader (42) as claimed in claim 1 or 2 wherein said housing (64) has a lower planar floor (66) and an upper wall (74) configured so that said width continuously increases around the periphery of said housing (64) up to said outlet (72).

4. The crop residue spreader (42) as claimed in claim 1 or 2 wherein said width has a greater increase around the periphery of said housing (64) than said radial distance.

5. The crop residue spreader (42) according to any one of the preceding claims wherein said housing (64) has an upper wall (74) with a flat surface and said outer wall (68) is curved around the periphery.

6. The crop residue spreader (42) as claimed in claim 5 wherein said upper wall (74) has a circular inlet (76) shaped with a conical section (78) tapered in the direction of flow of residue into said crop residue spreader (42).

7. The crop residue spreader (42) as claimed in claim 6 further comprising a motor (50) for driving said bats (46).

8. The crop residue spreader (42) as claimed in claim 7 wherein said bats (46) have flexible outer portions (60, 58).

9. A combine harvester (20) having a crop processing system (22) for separating crop material from crop residue and for discharging crop residue and a crop residue spreader (42) configured to receive crop residue from said crop processing system (22), **characterized in that** said crop residue spreader is a crop residue spreader (42) according to any one of the preceding claims.

## Patentansprüche

1. Erntegutrestestreuer (42), umfassend:
eine Vielzahl sich radial erstreckender Schlagplatten (46), die für eine Rotationsbewegung um eine Achse (A) befestigt sind, zum Bewegen von Resten; und
ein Gehäuse (64), das die Schlagplatten (46) umgibt, angrenzend an die Achse (A) einen Einlass (76) für Reste aufweist und eine äußere Wand (68) aufweist, die sich um die Peripherie der Schlagplatten (46) erstreckt, wobei das Gehäuse (64) weiterhin einen Auslass (72) umfasst, der mit der äußeren Wand (68) verbunden ist;
**dadurch gekennzeichnet, dass** das Gehäuse (64) eine in einer Richtung parallel zur Achse (A) gemessene Breite aufweist, die sich von einer minimalen Breite angrenzend an das stromabwärts gelegene Ende des Auslasses (72) um die Peripherie des Gehäuses (64) bis zu dem Auslass (72) erhöht.

2. Erntegutrestestreuer (42) nach Anspruch 1, wobei sich der radiale Abstand der äußeren Wand (68) von der Achse (A) kontinuierlich erhöht.

3. Erntegutrestestreuer (42) nach Anspruch 1 oder 2, wobei das Gehäuse (64) einen unteren planaren Boden (66) und eine obere Wand (74) aufweist, die derart gestaltet sind, dass sich die Breite um die Peripherie des Gehäuses (64) bis zu dem Austritt (72) kontinuierlich erhöht.

4. Erntegutrestestreuer (42) nach Anspruch 1 oder 2, wobei die Breite eine größere Erhöhung um die Peripherie des Gehäuses (64) aufweist als der radiale Abstand.

5. Erntegutrestestreuer (42) nach einem der vorangehenden Ansprüche, wobei das Gehäuse (64) eine obere Wand (74) mit einer flachen Fläche aufweist und die äußere Wand (68) um die Peripherie gekrümmt ist.

6. Erntegutrestestreuer (42) nach Anspruch 5, wobei die obere Wand (74) einen kreisförmigen Einlass (76) aufweist, der mit einem konischen Abschnitt (78) gestaltet ist, der sich in Strömungsrichtung der Reste in den Erntegutrestestreuer (42) verjüngt.

7. Erntegutrestestreuer (42) nach Anspruch 6, weiterhin umfassend einen Motor (50) zum Antreiben der Schlagplatten (46).

8. Erntegutrestestreuer (42) nach Anspruch 7, wobei die Schlagplatten (46) flexible Außenabschnitte (60, 58) aufweisen.

9. Mähdrescher (20) mit einem Erntegutverarbeitungssystem (22) zum Trennen von Erntegutmaterial von Erntegutresten und zum Ausstoßen von Erntegutresten, und mit einem Erntegutrestestreuer (42), der gestaltet ist, um Erntegutreste von dem Erntegutverarbeitungssystem (22) zu empfangen, **dadurch gekennzeichnet, dass** der Erntegutrestestreuer ein Erntegutrestestreuer (42) nach einem der vorangehenden Ansprüche ist.

## Revendications

1. Épandeur de résidus de récolte (42) comprenant :
plusieurs battes s'étendant radialement (46), montées afin de permettre un mouvement de rotation autour d'un axe (A) permettant de déplacer des résidus ; et
un boîtier (64) entourant lesdites battes (46) et pourvu d'un orifice d'entrée (76) pour des résidus adjacent audit axe (A) et comportant une paroi extérieure (68) s'étendant autour de la périphérie desdites battes (46), ledit boîtier (64) comprenant en outre une sortie (72) reliée à ladite paroi extérieure (68) ;
**caractérisé en ce que** ledit boîtier (64) a une largeur mesurée dans une direction parallèle audit axe (A) qui augmente à partir d'une largeur minimale au niveau de l'extrémité en aval de ladite sortie (72) autour de la périphérie dudit boîtier (64) jusqu'à ladite sortie (72).

2. Épandeur de résidus de récolte (42) selon la revendication 1, dans lequel la paroi extérieure (68) se trouve à une distance radiale augmentant continuellement à partir dudit axe (A).

3. Épandeur de résidus de récolte (42) selon les revendications 1 ou 2, dans lequel ledit boîtier (64) a un plancher plan inférieur (66) et une paroi supérieure (74) configurés de manière telle que ladite largeur augmente continuellement autour de la périphérie dudit boîtier (64) jusqu'à ladite sortie (72).

4. Épandeur de résidus de récolte (42) selon les revendications 1 ou 2, dans lequel ladite largeur augmente davantage que ladite distance radiale autour de la périphérie dudit boîtier (64).

5. Épandeur de résidus de récolte (42) selon l'une quelconque des revendications précédentes dans lequel ledit boîtier (64) a une paroi supérieure (74) avec une surface plate et ladite paroi extérieure (68) est courbée autour de la périphérie.

6. Épandeur de résidus de récolte (42) selon la revendication 5, dans lequel ladite paroi supérieure (74) a une entrée circulaire (76) avec une section conique (78) effilée dans la direction du flux de résidus vers ledit épandeur de résidus de récolte (42).

7. Épandeur de résidus de récolte (42) selon la revendication 6, comprenant en outre un moteur (50) entraînant lesdites battes (46).

8. Épandeur de résidus de récolte (42) selon la revendication 7, dans lequel lesdites battes (46) ont des parties extérieures flexibles (60, 58).

9. Moissonneuse-batteuse (20) pourvue d'un système de traitement de récolte (22) permettant de séparer la matière de récolte des résidus de récolte et d'évacuer les résidus de récolte et épandeur de résidus de récolte (42) conçu pour recevoir les résidus de récolte dudit système de traitement de récolte (22), **caractérisé en ce que** ledit épandeur de résidus de récolte est un épandeur de résidus de récolte (42) selon l'une quelconque des revendications précédentes.
